# EUROPÄISCHE PATENTSCHRIFT

(11) **EP 1 268 250 B1**
(45) Veröffentlichungstag und Bekanntmachung des Hinweises auf die Patenterteilung: **18.10.2006**
(21) Anmeldenummer: 00989840.4
(22) Anmeldetag: 09.12.2000
(51) Int. Cl.: B60T 13/74, H02K 37/06

(54) **ELEKTROMECHANISCHE RADBREMSVORRICHTUNG**
ELECTROMECHANICAL WHEEL BRAKE DEVICE
SYSTEME DE FREINAGE ELECTROMECANIQUE DE ROUE

(30) Priorität: 22.03.2000 DE 10014226
(43) Veröffentlichungstag der Anmeldung: 02.01.2003
(73) Patentinhaber: ROBERT BOSCH GMBH, 70442 Stuttgart (DE)
(72) Erfinder: HILZINGER, Juergen, 71229 Leonberg (DE); SCHUMANN, Frank, 74357 Boennigheim (DE); BLOSCH, Georg, 71711 Murr (DE); KASTINGER, Guenter, 76571 Gaggenau-Sulzbach (DE)
(86) Internationale Anmeldenummer: PCT/DE2000/004378
(87) Internationale Veröffentlichungsnummer: WO 2001/070552

(56) Entgegenhaltungen:
- EP-A- 0 557 123
- WO-A-96/03301
- GB-A- 2 115 227
- US-A- 4 355 249
- US-A- 5 543 674
- PATENT ABSTRACTS OF JAPAN vol. 7, no. 178 (E-191) [1323], 6. August 1983 (1983-08-06) & JP 58 083576 A (COPAL)

## Beschreibung

### Stand der Technik

Die Erfindung betrifft eine elektromechanische Radbremsvorrichtung mit den Merkmalen des Oberbegriffs des Anspruchs 1.

Eine derartige Radbremsvorrichtung ist bekannt aus der WO 96/03301. Die bekannte Radbremsvorrichtung weist einen Elektromotor mit einem ringförmigen Rotor auf, mit dem eine Mutter eines als Schraubgetriebe ausgebildeten Rotations/Translations-Umsetzungsgetriebe rotierend antreibbar ist. Das Rotations/Translations-Umsetzungsgetriebe setzt die rotatorische Antriebsbewegung des Elektromotors in eine translatorische Bewegung um, so dass ein Reibbremsbelag der Radbremsvorrichtung zur Erzeugung einer Bremskraft bzw. eines Bremsmoments an einen rotierenden Bremskörper andrückbar ist. Zum Lösen der Radbremsvorrichtung ist der Reibbremsbelag durch entgegengesetzte Rotation des Elektromotors vom Bremskörper abhebbar. Die bekannte Radbremsvorrichtung ist als Scheibenbremse ausgebildet, der Bremskörper ist eine drehfest mit einem Fahrzeugrad verbundene Bremsscheibe. Prinzipiell ist die Radbremsvorrichtung auch für andere Bremsenbauarten wie beispielsweise eine Trommelbremse anwendbar.

### Vorteile der Erfindung

Bei der erfindungsgemäßen Radbremsvorrichtung mit den Merkmalen des Anspruchs 1 ist der Elektromotor als sog. Transversalflussmotor mit einem ringförmigen Rotor ausgebildet. Im Gegensatz zu herkömmlichen Elektromotoren, die für jeden Pol eine eigene Erregerspule aufweisen, weist der erfindungsgemäße Transversalflussmotor lediglich eine Erregerwicklung je Strang auf. Die Erregerwicklung ist ringförmig, sie umschließt eine gedachte Motorachse. Zur Ausbildung von Magnetpolen weist der Stator Joche auf, die über den Umfang verteilt an der Erregerwicklung angeordnet und durch Bestromung der Erregerwicklung magnetisierbar sind. Die Joche sind vorzugsweise äquidistant über den Umfang angeordnet, was allerdings nicht zwingend ist. Durch Bestromung der Erregerwicklung werden an den Jochen Magnetfelder aufgebaut. Die ringförmige Erregerwicklung mit den über Ihren Umfang verteilt angeordneten Jochen werden nachfolgend auch als Erregeranordnung des erfindungsgemäßen Transversalflussmotors bezeichnet. Die Erregeranordnung bildet vorzugsweise einen Stator des Transversalflussmotors, da dies die Stromzuführung vereinfacht.

Des weiteren weist der Transversalflussmotor der erfindungsgemäßen Radbremsvorrichtung eine Anzahl an Polen auf, die vorzugsweise mit der Anzahl an Jochen übereinstimmt. Die Pole sind gemeinsam in bezug auf die Erregeranordnung bewegbar und zwar auf einer Kreisbahn in Umfangsrichtung der Joche. Bildet die Erregeranordnung den Stator des Transversalflussmotors so bilden die Pole dessen Rotor, d. h. sie sind gemeinsam auf einer Kreisbahn um die gedachte Motorachse drehbar gelagert. Zur Erzeugung einer Drehbewegung wird die Erregerwicklung bestromt, d. h. die Joche werden magnetisiert und ziehen die Pole magnetisch an. Die Pole werden in Richtung der Joche gezogen, bis sich Pole und Joche gegenüber stehen. Zur Erzeugung der Drehbewegung wird die Erregerwicklung bestromt, wenn die Pole in Umfangsrichtung zu den Jochen versetzt sind. Die Pole bewegen sich in Richtung der Joche, d. h. der Rotor dreht sich, solange bis sich Pole und Joche gegenüber stehen. Anschließend wird die Bestromung der Erregerwicklung unterbrochen. Um einen gleichmäßigeren Rundlauf des Transversalflussmotors und ein Drehmoment in jeder Drehstellung des Rotors zu erzielen, ist der Transversalflussmotor vorzugsweise mit drei oder mehr Strangen ausgebildet, wobei jeder Strang einer Erregeranordnung und zugeordnete Pole aufweist (Anspruch 3). Dadurch wird auch sichergestellt, dass der Transversalflussmotor in jeder Drehstellung seines Rotors anlauft, und zwar in jeder gewünschten Drehrichtung. Die Bestromung der Erregerwicklungen des Transversalflussmotors der erfindungsgemäßen elektromechanischen Radbremsvorrichtung wird elektronisch gesteuert. Bei einer Ausbildung des Transversalflussmotors mit Permanentmagneten sind zwei Strange ausreichend (Anspruch 4). Eine solche Ausgestaltung der Erfindung hat den Vorteil einer höheren Leistungsdichte.

Die erfindungsgemäße Radbremsvorrichtung hat den Vorteil, dass ihr Elektromotor nur eine Erregerwicklung je Strang anstatt der bei herkömmlichen Elektromotoren üblichen Spule je Pol benotigt. Da das Wickeln von Spulen und deren Anbringen auf den Polen bzw. Jochen aufwendig ist, ergibt sich eine Verringerung des Herstellungsaufwandes und der Herstellungskosten. Weiterer Vorteil der erfindungsgemäßen Radbremsvorrichtung ist, dass Permanentmagnete für ihren Transversalflussmotor verzichtbar sind, wodurch sich die Herstellungskosten und der Herstellungsaufwand weiter verringern. Weitere Vorteile des Transversalflussmotors sind eine erhöhte Motordynamik, da er sich bauartbedingt problemlos mit einer großen Polzahl herstellen lässt. Durch eine Vergrößerung der Polzahl ändert sich die Anzahl an Wicklungen/Spulen nicht. Eine Vergrößerung der Polzahl erhöht deswegen den Herstellungsaufwand nicht oder nur wenig und es tritt nicht das Problem auf, dass sich eine große Spulenzahl nicht unterbringen oder nicht montieren lässt. Weitere Vorteile sind eine Verbesserung des Wirkungsgrades, kleiner Bauraum und eine Erhöhung der Leistungsdichte. Zudem eignet sich der Transversalflussmotor bauartbedingt für einen ringförmigen Aufbau, wodurch sich das Rotations/Translations-Umsetzungsgetriebe und eine ggf. zwischen den Elektromotor und das Rotations/Translations-Umsetzungsgetriebe geschaltetes Untersetzungsgetriebe in einem Hohlraum innerhalb des ringförmigen Transversalflussmotors unterbringen lassen. Zudem führt eine ringförmige Anordnung des Elektromotors um das Getriebe herum zu einem großen Hebelarm und damit einem hohen Antriebsmoment des Elektromotors.

Die Unteransprüche haben vorteilhaft Ausgestaltungen und Weiterbildungen der im Anspruch 1 angegebenen Erfindung zum Gegenstand.

### Zeichnung

Die Erfindung wird nachfolgend anhand in der Zeichnung dargestellter Ausführungsbeispiele näher erläutert. Es zeigen:
Figur 1 einen Achsschnitt einer elektromechanische Radbremsvorrichtung gemäß der Erfindung mit einem Transversalflussmotor in Außenläuferbauform;
Figur 2 eine schematisierte Rotor/Statoranordnung des Transversalflussmotors aus Figur 1;
Figur 3 eine abgewandete Ausführungsform der Erfindung mit einem Innenläufer-Transversalflussmotor;
Figur 4 eine weitere, abgewandelte Ausführungsform der Erfindung mit einem Scheibenläufer-Transversalflussmotor;
Figur 5 eine schematisierte Rotor/Statoranordnung des Transversalflussmotors aus Figur 4; und
Figur 6 eine weitere Ausgestaltung der Erfindung mit einem Scheibenläufer- Transversalflussmotors;

### Beschreibung des ersten Ausführungsbeispiels

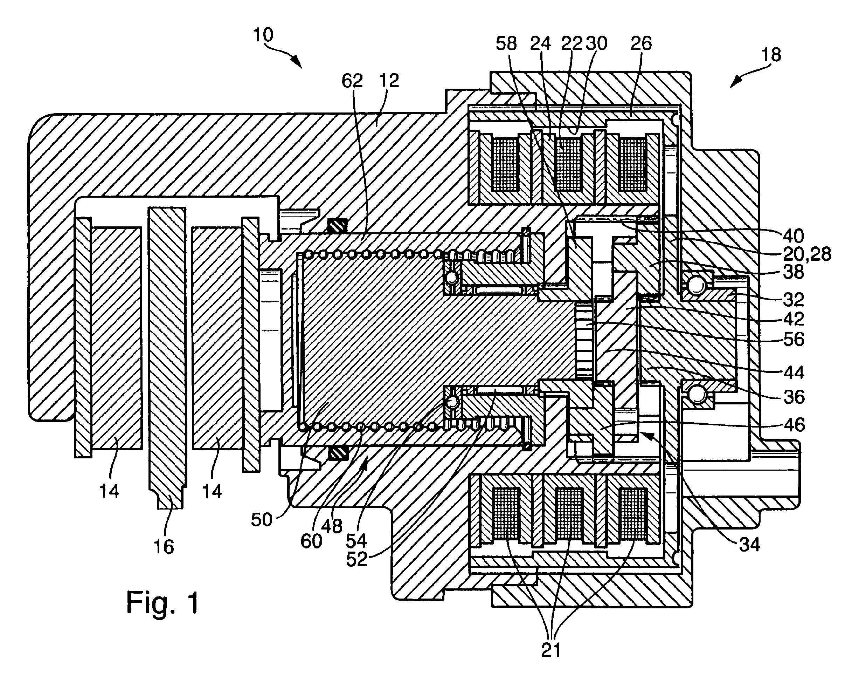

Die in Figur 1 dargestellte, erfindungsgemäße elektromechanische Radbremsvorrichtung 10 ist als Scheibenbremsvorrichtung ausgebildet. Sie weist einen Bremssattel 12 auf, in dem zwei Reibbremsbeläge 14 angebracht sind, zwischen denen eine Bremsscheibe 16 rotierbar angeordnet ist, die mit einem nicht dargestellten Fahrzeugrad drehfest verbunden ist. Zur Erzeugung einer Bremskraft bzw. eines Bremsmoments wird der in der Zeichnung rechts dargestellte Reibbremsbelag 14 gegen eine Seite der Bremsscheibe 16 gedrückt. Eine Reaktionskraft der Andruckkraft des einen Reibbremsbelags 14 verschiebt den als Schwimmsattel ausgebildeten Bremssattel 12 in an sich bekannter Weise zur Seite (in der Zeichnung nach rechts), so dass auch der andere Reibbremsbelag 14 gegen die andere Seite der Bremsscheibe 16 gedrückt und dadurch eine Bremskraft mit beiden Reibbremsbelägen 14 auf die Bremsscheibe 16 ausgeübt wird.

Zu ihrer Betätigung weist die Radbremsvorrichtung 10 einen Elektromotor 18 auf, der erfindungsgemäß als Transversalflussmotor 18 ausgebildet ist, und zwar in der in Figur 1 dargestellten Ausführungsform der Erfindung als sog.

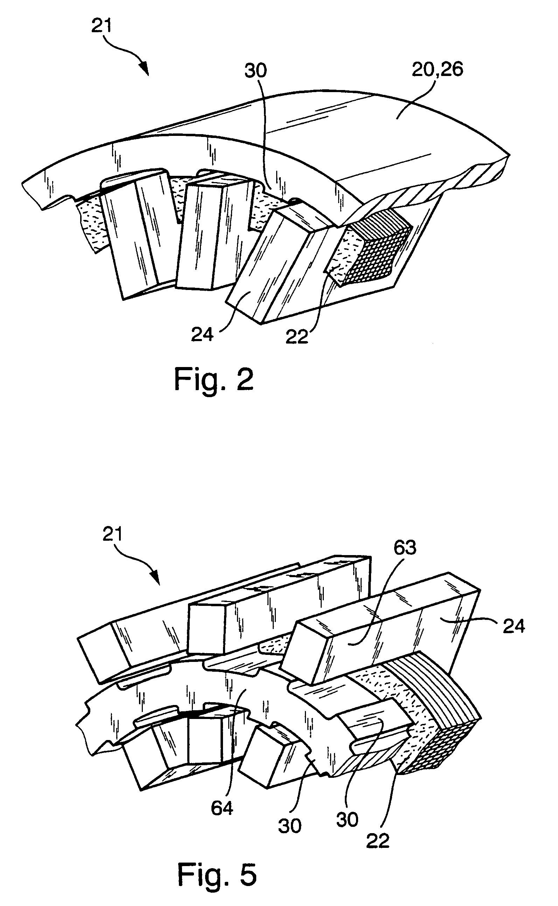

Außenläufer. Der Elektromotor 18 ist ringförmig aufgebaut, was sich auch als Hohlwellenbauform bezeichnen lässt. Ein Rotor 20 des Elektromotors 18 ist rohr- oder topfförmig ausgebildet. Der als Transversalflussmotor 18 ausgebildete Elektromotor 18 der Radbremsvorrichtung 10 weist drei Stränge auf, die axial nebeneinander ein Bremszangengehäuse umschließend angeordnet sind. Aufbau und Funktion des Transversalflussmotors 18 werden nachfolgend anhand von Figur 2 erläutert, die eine schematische Darstellung eines Strangs des Transversalflussmotors 18 zeigt. Jeder Strang des Transversalflussmotors 18 weist eine kreisringförmige Erregerspule 22 auf, die eine gedacht Motorachse des Transversalflussmotors koaxial umschließt. Die Erregerwicklung 22 ist in U-förmige Joche 24 eingelegt, die äquidistant über den Umfang der Erregerwicklung 22 verteilt angeordnet sind. Der Transversalflussmotor 18 weist beispielsweise 12 Joche 24 auf. Die U-förmigen Joche 24 sind bei dem in Figur 1 dargestellten Außenläufer nach außen offen. Die in den Jochen 24 einliegende Erregerwicklung 22 und die Joche 24 bilden eine Erregeranordnung 22, 24 des Transversalflussmotors 18, die im dargestellten Ausführungsbeispiel zugleich einen Stator des Transversalflussmotors 18 bildet.

Der Rotor 20 des Transversalflussmotors 18 ist topfförmig ausgebildet, er weist eine Umfangswand 26 auf, die mit einer Stirnwand 28 einstückig ist. Eine Innenseite der Umfangswand 26 des Rotors 20 ist mit einer Art Zahnung versehen, die nach innenstehende Pole 30 bildet. Der Rotor 26 weist die selbe Anzahl an Polen 30 auf wie der Stator 22, 24 Joche 24 aufweist, die Pole 30 haben den selben Winkelabstand in Umfangsrichtung voneinander wie die Joche 24.

Befinden sich die Joche 30 des Rotors 26 in einer zu den Jochen 24 des Stators 22, 24 versetzten Stellung wie in Figur 2 dargestellt, werden sie durch Bestromung der in den Jochen 24 einliegenden Erregerwicklung durch Magnetkraft in Richtung der Joche 24 gezogen, wodurch ein Drehmoment auf den Rotor 20 des Transversalflussmotors 18 ausgeübt und dieser in Drehung versetzt wird. Das Drehmoment wird solange auf den Rotor 20 ausgeübt, bis die Pole 30 und die Joche 24 einander deckungsgleich gegenüber stehen. In dieser Drehstellung des Rotors 20 wird die Bestromung 20 der Erregerwicklung 22 dieses Strangs des Transversalflussmotors 18 und es wird die Erregerwicklung 22 des nachfolgenden Strangs bestromt. Der nachfolgende Strang ist derjenige, bei welchem der Winkelversatz zwischen Polen 30 und Jochen 24 in Drehrichtung des Rotors 26 kleiner ist. Der Rotor 26 wird dadurch weiter gedreht, bis die Pole 30 und die Joche 24 des nachsten Strang einander deckungsgleich gegenüberstehen, woraufhin die Bestromung der Erregerwicklung 22 auch dieses Strangs abgeschaltet und die Erregerwicklung 22 des dritten Strangs bestromt wird. Durch fortgesetzte, aufeinander folgende Bestromung der Erregerwicklungen 22 der drei Strange des Transversalflussmotors 18 wird dessen Rotor in Drehung versetzt und gehalten. Um den Transversalflussmotor 18 in entgegengesetzter Richtung zu drehen, wird die Reihenfolge der Bestromung der Errregerwicklungen 22 umgekehrt. Da stets bei einem Strang des Transversalflussmotors 18 die Pole 30 einen Winkelversatz zu den Jochen 24 in einer Umfangsrichtung und die Pole 30 eines anderen Strangs einen Versatz zu den Jochen 24 dieses anderen Strangs in entgegengesetzter Umfangsrichtung aufweisen läuft der Transversalflussmotor 18 in jeder Drehstellung seines Rotors 20 an und zwar in gewünschter Drehrichtung.

Es sind entweder die Pole 30 oder die Joche 24 der drei Stränge des Transversalflussmotors 18 in Umfangsrichtung vorzugsweise um 1/3 ihres Abstands in Umfangrichtung versetzt zueinander, d. h. die drei Stränge des Transversalflussmotors 18 haben eine Phasenverschiebung von 1/3 des Winkelabstands ihrer Pole 30 bzw. Joche 24 voneinander in Umfangsrichtung.

Eine Steuerung der Bestromung der Erregerwicklungen 22 in Abhängigkeit der Winkelstellung des Rotors 26 in bezug auf den Stator 22, 24 erfolgt elektronisch. Eine zur Steuerung der Bestromung der Erregerwicklungen 22 erfolgt mittels eines Radial-Sensor-Lagers 32, mit dem der Rotor 20 des Transversalflussmotors 18 im Bremssattel 12 drehbar gelagert ist. Derartige Sensor-Lager 32 sind an sich bekannt und sollen deswegen, da sie nicht den eigentlichen Gegenstand der Erfindung bilden, nicht näher erläutert werden.

Die drei Stränge des Transversalflussmotors 18 sind axial nebeneinander auf einem Gehäuse der Bremszange 12 angeordnet. Dabei sind die den Stator bildende Erregerwicklung 22 und Joche 24 fest auf eine Außenseite des Gehäuses der Bremszange 12 aufgesetzt und werden durch einen Luftspalt getrennt von der Umfangswand 26 des Rotors 20 umschlossen.

Die erfindungsgemäße Radbremsvorrichtung 10 weist ein Untersetzungsgetriebe 34 auf, das innerhalb eines Hohlraums des ringförmig ausgebildeten Transversalflussmotors 18 untergebracht ist. Das Untersetzungsgetriebe 34 ist im dargestellten Ausführungsbeispiel der Erfindung als zweistufiges Planetengetriebe 34 ausgebildet. Eine erste Stufe des Planetengetriebes 34 weist ein mit der Stirnwand 28 des Rotors 20 drehfestes Sonnenrad 36 auf, welches mit drei Planetenräder 38 kämmt, die ihrerseits mit einer Innenverzahnung 40 kämmen, die an der Innenseite eines zylindrischen Hohlraums der Bremszange 12 angebracht ist. Die Innenverzahnung 40 bildet ein feststehendes Hohlrad 40 des Planetengetriebes 34.

Drehfest mit einem Planetenträger 42 der ersten Stufe des Planetengetriebes 34 ist ein Sonnenrad 44 der zweiten Stufe des Planetengetriebes 34, das mit Planetenrädern 46 der zweiten Stufe des Planentengetriebes 34 kämmt. Auch die Planetenräder 46 der zweiten Stufe des Planentengetriebes 34 kämmen mit der Innenverzahnung 40 der Bremszange 12, die ein feststehendes Hohlrad auch der zweiten Stufe des Planetengetriebes 34 bildet.

Zur Umsetzung der Rotationsbewegung des Transversalflussmotors 18, die vom Plantetengetriebe 34 untersetzt wird, in eine Translationsbewegung zum Andrücken der Reibbremsbeläge 14 an die Bremsscheibe 16 weist die erfindungsgemäße Radbremsvorrichtung 10 ein Schraubgetriebe 48 auf, das im dargestellten und beschriebenen Ausführungsbeispiel der Erfindung als Kugelgewindetrieb 48 ausgebildet ist. Das Rotations/Translations-Umsetzungsgetriebe 48 ist teilweise innerhalb des Hohlraums des ringförmig ausgebildeten Transversalflussmotors 18 angeordnet, wodurch sich insgesamt ein kompakter Aufbau der Radbremsvorrichtung 10 ergibt. Das als Kugelgewindetrieb 48 ausgebildete Rotations/Translations-Umsetzungsgetriebe 48 weist eine Spindel 50 auf, die mit einem Radial-Nadellager 52 drehbar in der Bremszange 12 gelagert ist und die sich über ein Axial-Kugellager 54 axial gegen die Bremszange 12 abstützt. Über eine Kerbzahnverbindung 56 ist die Spindel 50 drehfest mit einem Planetenträger 58 der zweiten Stufe des Planetengetriebes 34 verbunden. Über Kugeln 60 steht die Spindel 50 des Kugelgewindetriebs 48 in Eingriff mit einer Mutter 62 des Kugelgewindetriebs 48. An einer dem Planetengetriebe 34 abgewandten Stirnseite der Mutter 62 ist einer der beiden Reibbremsbeläge 14 angeordnet. Mit dem Transversalflussmotor 18 lässt sich über das Planetengetriebe 34 die Spindel 54 des Kugelgewindetriebs rotierend antreiben, die Mutter 62 des Kugelgewindetriebs 48 verschiebt, so dass die Reibbremsbeläge 14 an die Bremsscheibe 16 andrückbar sind. Durch entgegengesetzte Rotation des Transversalflussmotors 18 lassen sich die Reibbremsbeläge 14 wieder von der Bremsscheibe 16 abheben.

### Beschreibung des zweiten Ausführungsbeispiel

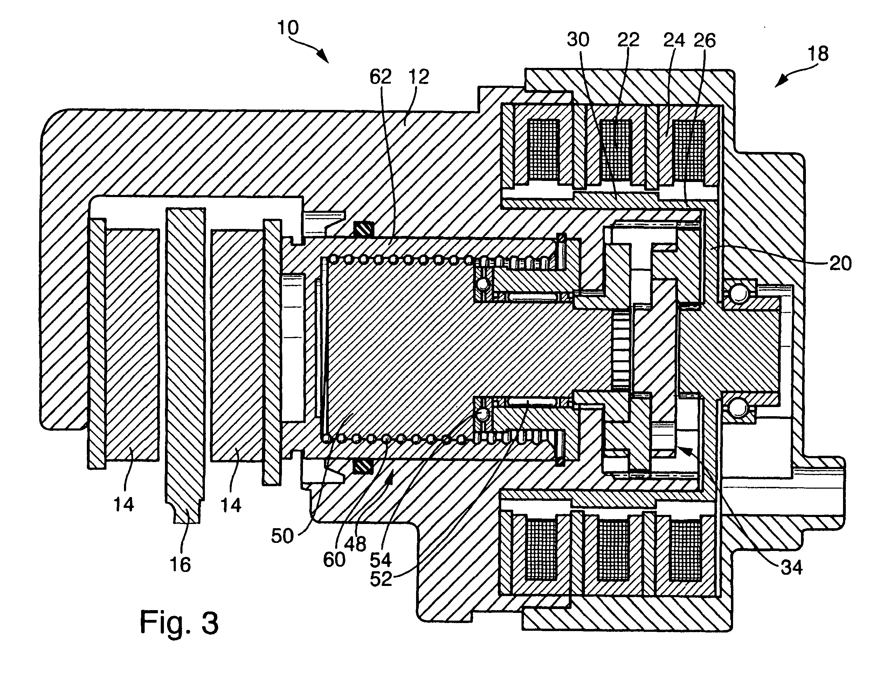

Zur Vermeidung von Wiederholungen werden nachfolgend lediglich der Unterschiede der in Figur 3 dargestellten, erfindungsgemäßen elektromechanische Radbremsvorrichtung 10 im Vergleich zu dem in Figur 1 dargestellten Radbremsvorrichtung 10 erläutert. Im übrigen wird auf die Erlauterungen zu Figur 1 verwiesen. Für gleiche Bauteile werden gleiche Bezugszahlen verwendet. Bei der in Figur 3 dargestellten Radbremsvorrichtung 10 ist der Transversalflussmotor 18 anders ausgebildet als in Figur 1. Der Transversalflussmotor 18 ist in Figur 3 ebenfalls als Hohlwellenmotor ausgebildet, allerdings in sog. Innenläufer Bauform. Bei dem in Figur 3 dargestellten Transversalflussmotor 18 befindet sich die Erregeranordnung 22, 24 mit der Erregerwicklung 22 und den U-förmigen Jochen 24 außerhalb des ebenfalls topfförmig ausgebildeten Rotors 20. Die U-formigen Joche 24 sind dem zufolge von außen auf die Erregerwicklung 22 aufgesetzt, die Öffnung der Joche 24 weist radial nach innen auf die zylindrische Umfangswandung 22 des Rotors 20 zu. Die die Pole 30 bildende Verzahnung des Rotors 20 ist auf der Außenseite der Umfangswand 26 angeordnet. Mit Ausnahme der auf einer Außenseite des topfformigen Rotors 20 angeordneten Erregeranordnung 22, 24, die zugleich den Stator des Transversalflussmotors 18 bildet, und einem demzufolge kleineren Durchmessers des Rotors 20, ist der Transversalflussmotor 18 aus Figur 3 gleich aufgebaut wie der in Figur 1 dargestellte und oben erläuterte Transversalflussmotor 18, er funktioniert in gleicher Weise. Der übrige Aufbau der Radbremsvorrichtung 10 aus Figur 3 mit dem zweistufigen Planetengetriebe 34 und dem als Kugelgewindetrieb 48 ausgebildeten Rotations/Translations-Umsetzungsgetriebe 48 ist übereinstimmend mit Figur 1 ausgebildet und funktioniert in gleicher Weise.

### Beschreibung des dritten und vierten Ausführungsbeispiel der Erfindung

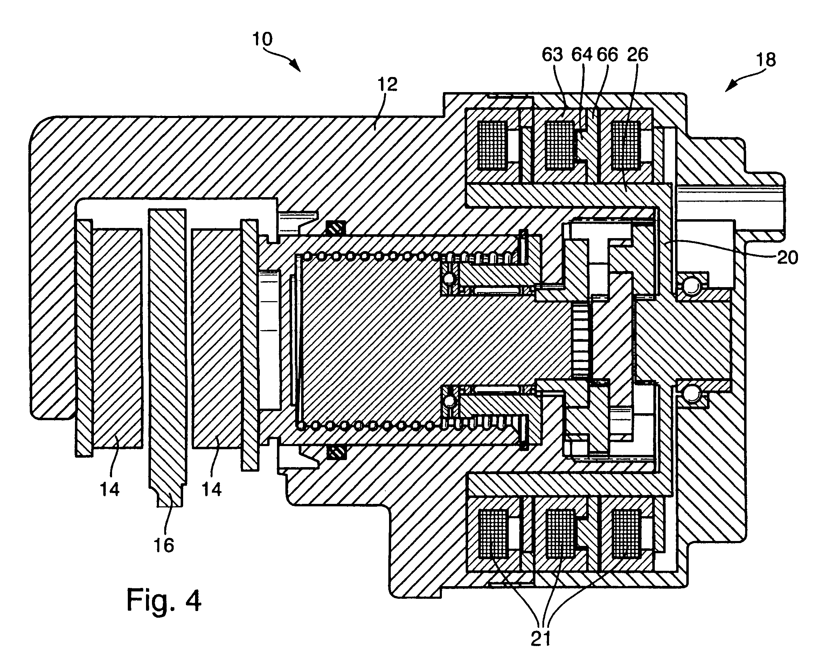

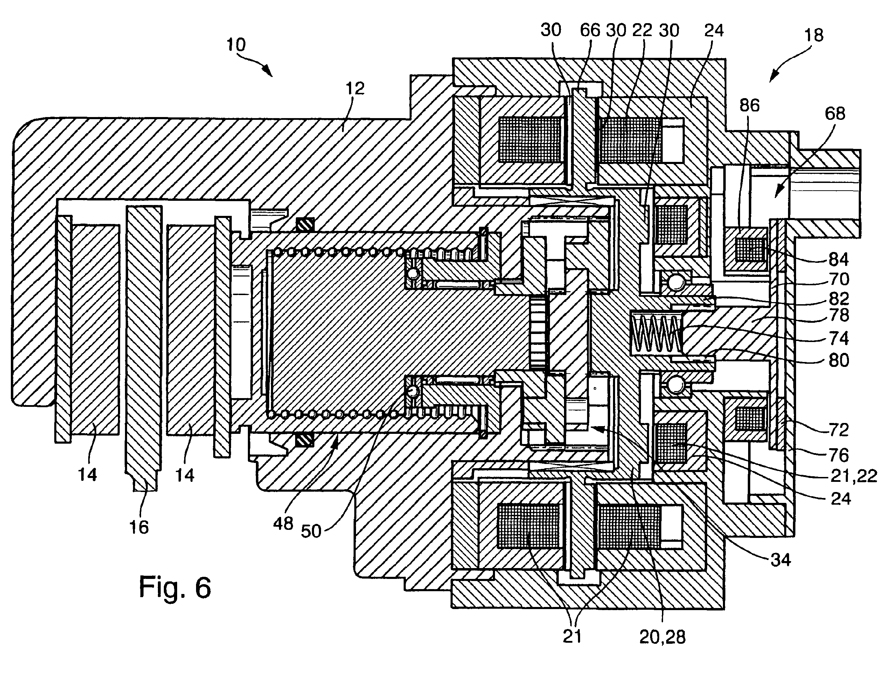

Bei der in Figur 4 dargestellten Ausführungsform der Erfindung weist die Radbremsvorrichtung 10 einen Transversalflussmotor 18 in Scheibenläufer Bauform auf. Der Aufbau des Transversalflussmotors 18 wird anhand der in Figur 5 dargestellten Skizze erläutert. Auch hier weist jeder Strang 21 des Transversalflussmotors 18 eine kreisringförmige Erregerwicklung 22 auf, die eine gedachte Motorachse konzentrisch umschließt. Abweichend zu Figuren 1 und 3 sind die U-förmigen Joche 24 seitlich, also mit achsparallelen Schenkeln 63 auf die Erregerwicklung 22 aufgesetzt. Der Rotor 20 weist einen Polring 64 auf, der mit je einer die Pole 30 bildenden Verzahnung auf der Außen- und der Innenseite versehen ist. Die Pole 30 stehen also radial nach außen und nach innen vom Polring 64 ab. Der Polring 64 befindet sich axial neben der Erregerwicklung 22 innerhalb einer Öffnung der seitlich offenen U-förmigen Joche 24. Wie bereits zu Figur 2 beschrieben lassen sich durch Bestromung der Erregerwicklung 22 die Pole 30 durch Magnetkraft soweit in Umfangsrichtung bewegen, bis sie sich in Deckung mit den Jochen 24 befinden, so dass durch wiederholte, aufeinanderfolgende Bestromung der Erregerwicklungen 22 der drei Stränge 21 des Transversalflussmotors 18 dessen Rotor 20 in Drehung versetzbar ist. Der Polring 64 ist auf einer Ringscheibe 66 angebracht, die in einer Radialebene angeordnet und drehfest auf einer Außenseite der zylindrischen Umfangswand 26 des Rotors 20 angebracht ist. Die Ringscheibe 66 ist in Figur 5 nicht gezeichnet, da sie die Erregerwicklung 22 und den Polring 64 vollständig und die Joche 24 teilweise verdecken würde, so dass die Anordnung dieser Teile nicht sichtbar wäre.

Mit Ausnahme des erläuterten Aufbaus des Transversalflussmotors 18 ist die in Figur 4 dargestellte Radbremsvorrichtung 10 gleich aufgebaut und funktioniert in gleicher Weise wie die in Figur 1 beschriebene Radbremsvorrichtung 10. Zur Vermeidung von Wiederholungen wird auf obige Erläuterungen zu Figur 1 verwiesen.

Figur 6 zeigt eine abgewandelte Ausführungsform der in Figur 4 dargestellten Radbremsvorrichtung 10 mit einem abgeänderten Transversalflussmotor 18, der ebenfalls in Scheibenläufer Bauform ausgebildet ist. Bei dieser Ausgestaltung der Erfindung befinden sich nur zwei der drei Stränge 21 des Transversalflussmotors 18 außerhalb des topfförmig ausgebildeten Rotors 20. Die Erregerwicklungen 22 dieser beiden Stränge 21 des Transversalflussmotors 18 befinden sich auf den beiden Seiten der Ringscheibe 66, die offenen Seiten ihrer U-förmigen Joche 24 sind einander zugewandt, d. h. in Richtung der Ringscheibe 66 gerichtet. Die Ringscheibe 66 ist auf beiden Seiten mit einer Verzahnung versehen, die die Pole 30 des Rotors 20 bilden. Zur Erzielung des bereits zu Figuren 1 und 2 beschriebenen Phasenversatzes sind die Joche 30 der beiden Stränge 21 in Umfangsrichtung um 1/3 des Abstands der Joche 30 eines Strangs 21 zueinander versetzt, weswegen in Figur 6 die auf der rechten Seite der Ringscheibe 66 angeordneten Joche 30 geschnitten und die auf der linken Seite der Ringscheibe 66 angeordneten Joche 30 in Ansicht erscheinen.

Der dritte Strang 21 des Transversalflussmotors 18 der in Figur 6 dargestellten Radbremsvorrichtung 10 ist innerhalb eines der beiden anderen Stränge 21 auf einer Außenseite, also axial neben der Stirnwand 28 des Rotors 20 angeordnet. Die Stirnwand 28 ist wiederum mit einer Verzahnung versehen, die die Pole 30 dieses dritten Strangs 21 des Transversalflussmotors 18 bilden. Die Erregerwicklung 22 dieses dritten Strangs 21 des Transversalflussmotors 18 weist einen kleineren Durchmesser auf als die Erregerwicklungen 22 der beiden anderen Stränge 21, die Erregerwicklung 22 des dritten Strangs 21 bildet ebenfalls einen Kreisring, der konzentrisch zu einer gedachten Motorachse des Transversalflussmotors 18 angeordnet ist. Auf die Erregerwicklung 22 des dritten Strangs 21 sind ebenfalls U-förmige Joche 24 aufgesetzt, deren offene Seiten den Polen 30 des dritten Strangs 21 des Transversalflussmotors 18 zugewandt sind. Die Funktion des Transversalflussmotors 18 der in Figur 6 dargestellten Ausführungsform der Radbremsvorrichtung 10 ist die gleiche wie in Figur 1. In Figur 6 ist mit Anordnung der Erregeranordnung 22, 24 des dritten Strangs 21 innerhalb der Erregeranordnung 22, 24 eines der beiden anderen Stränge 21 eine kompaktere Bauform des Transversalflussmotors 18 gewählt worden.

Der übrige Aufbau der in Figur 6 dargestellten Radbremsvorrichtung 10 mit dem zweistufigen Planetengetriebe 34, das vollständig innerhalb des Rotors 20 des Transversalflussmotors 18 angeordnet ist, und dem als Kugelgewindetrieb 48 ausgebildeten Rotations/Translations-Umsetzungsgetriebes 48 stimmt mit dem Aufbau dieser Teile der in Figur 1 dargestellten Radbremsvorrichtung 10 überein.

Zur Verwirklichung einer Feststellbremsfunktion weist die in Figur 6 dargestellte Radbremsvorrichtung 10 zusätzlich eine Feststellbremse 68 auf. Die Feststellbremse 68 ist als Magnetbremse 68 ausgebildet, die in unbestromtem Zustand die Spindel 50 des Kugelgewindetriebs 48 feststellt und durch Bestromen lösbar ist. Die Magnetbremse 68 weist eine Ankerplatte 70 auf, die mit einem kreisscheibenförmigen Reibbremsbelag 72 versehen ist, mit dem sie von einer Schraubendruckfeder 74 gegen einen Gehäusedeckel 76 der Bremszange 12 gedrückt wird. Auf diese Weise ist die Ankerplatte 70 der Magnetbremse 68 in unbestromten Zustand drehfest gehalten. Von der Ankerplatte 70 steht ein Zapfen 78 ab, der mit einer Kerbzahnverbindung 80 drehfest und axial verschieblich in eine Hülse 82 eingreift, die einstückig von der Stirnwand 28 des Rotors 20 absteht. Zum Lösen weist die Magnetbremse 68 eine Spule 84 auf, die in einem im Querschnitt U-förmigen Ringjoch 86 einliegt. Wird die Spule 84 bestromt, zieht sie die Ankerscheibe 70 durch Magnetkraft an, so dass die Ankerscheibe 70 gegen die Kraft der Schraubendruckfeder 74 vom Gehäusedeckel 76 abgehoben wird und dadurch drehbar ist. Da die Magnetbremse 68 in unbestromten Zustand den Rotor 20 und über das Planetengetriebe 34 die Spindel 50 des Kugelgewindetriebs 48 drehfest hält, bleibt eine einmal mit dem Transversalflussmotor 18 aufgebrachte Bremskraft der Radbremsvorrichtung 10 auch ohne Bestromung des Transversalflussmotors 18 erhalten, wodurch die Radbremsvorrichtung 10 auch als Feststellbremse verwendbar ist. Auch während eines Bremsvorgangs kann die Magnetbremse 68 festgestellt werden, wenn eine mit dem Transversalflussmotor 18 aufgebaute Bremskraft der Radbremsvorrichtung 10 konstant gehalten werden soll, der Transversalflussmotor 18 muss zum Konstanthalten der Bremskraft nicht bestromt werden. Lediglich zum Aufbringen und Vergrößern der Bremskraft und zum vollständigen Lösen der Radbremsvorrichtung 10 wird der Transversalflussmotor 18 bei gelöster, d. h. bestromter Magnetbremse 68 bestromt. Der Kugelgewindetrieb 48 ist selbsthemmungsfrei ausgeführt, so dass sich eine mit dem Transversalflussmotor 18 aufgebaute Bremskraft der Radbremsvorrichtung 10 bis auf eine geringe Restbremskraft selbsttätig abbaut.

## Patentansprüche

1. Elektromechanische Radbremsvorrichtung, mit einem Elektromotor (18), der einen ringförmigen Rotor (20) aufweist, mit einem Rotations/Translations-Umsetzungsgetriebe (48), das mit dem Elektromotor (18) rotierend antreibbar ist, und mit einem Reibbremsbelag (14), der mittels des Rotations/Translations-Umsetzungsgetriebes (48) an einen Bremskörper (16) andrückbar ist, **dadurch gekennzeichnet, dass** der Elektromotor (18) als Transversalflussmotor (18) mit einer ringförmigen, eine gedachte Motorachse umschließenden Erregerwicklung (22) ausgebildet ist, wobei der Elektromotor (18) eine Anzahl Joche (24) aufweist, die über den Umfang verteilt an der Erregerwicklung (22) angeordnet und mit dieser erregbar sind, und mit einer mit der Anzahl der Joche (24) vorzugsweise übereinstimmenden Anzahl an Polen (30), die in bezug auf die Joche (34) gemeinsam auf einer Kreisbahn in Umfangsrichtung der Joche (24) bewegbar geführt und zur Erzielung einer Kreisbewegung durch Erregung der Joche (24) von den Jochen (24) magnetisch anziehbar sind.

2. Elektromechanische Radbremsvorrichtung nach Anspruch 1, **dadurch gekennzeichnet, dass** die Joche (24) U-förmig ausgebildet sind und die Erregerwicklung (22) in den Jochen (24) einliegt.

3. Elektromechanische Radbremsvorrichtung nach Anspruch 1, **dadurch gekennzeichnet, dass** der Transversalflussmotor (18) drei oder mehr Stränge (21) mit je einer Erregerwicklung (22), einer Anzahl Joch (24) und zugeordneten Polen (30) aufweist.

4. Elektromechanische Radbremsvorrichtung nach Anspruch 1, **dadurch gekennzeichnet, dass** der Transversalflussmotor (18) Permanentmagnete aufweist.

5. Elektromechanische Radbremsvorrichtung nach Anspruch 1, **dadurch gekennzeichnet, dass** die Radbremsvorrichtung (10) ein Untersetzungsgetriebe (34) aufweist, das dem Elektromotor (18) und dem Rotations/Translations-Umsetzungsgetriebe (48) zwischengeschaltet ist.

6. Elektromechanische Radbremsvorrichtung nach Anspruch 5, **dadurch gekennzeichnet, dass** das Untersetzungsgetriebe (34) innerhalb des Rotors (20) des Elektromotors (18) und das Rotations/Translations-Umsetzungsgetriebe (48) zumindest teilweise innerhalb des Rotors (20) des Elektromotors (18) angeordnet ist.

7. Elektromechanische Radbremsvorrichtung nach Anspruch 1, **dadurch gekennzeichnet, dass** das Rotations/Translations-Umsetzungsgetriebe (48) als Kugelgewindetrieb (48) ausgebildet ist.

8. Elektromechanische Radbremsvorrichtung nach Anspruch 1, **dadurch gekennzeichnet, dass** das Rotations/Translations-Umsetzungsgetriebe (48) selbsthemmungsfrei ist.

9. Elektromechanische Radbremsvorrichtung nach Anspruch 1, **dadurch gekennzeichnet, dass** die Radbremsvorrichtung (10) eine Feststellbremse (68) aufweist, mit der das Rotations/Translations-Umsetzungsgetriebe (48) feststellbar ist.

10. Elektromechanische Radbremsvorrichtung nach Anspruch 1, **dadurch gekennzeichnet, dass** das Rotations/Translations-Umsetzungsgetriebe (48) als Schraubgetriebe (48) ausgebildet ist und dass eine Spindel (50) des Schraubgetriebes (48) rotierend angetrieben wird.

## Claims

1. Electromechanical wheel brake apparatus, comprising an electric motor (18) which has an annular rotor (20), a rotation/translation conversion gear mechanism (48) which can be driven by the electric motor (18) so as to rotate, and a friction brake lining (14) which can be pressed against a brake element (16) by means of the rotation/translation conversion gear mechanism (48), **characterized in that** the electric motor (18) is in the form of a transverse flux motor (18) with an annular field winding (22) which surrounds an imaginary motor axis, with the electric motor (18) having a number of yokes (24) which are distributed over the circumference of the field winding (22) and can be excited by the latter, and with a number of poles (30) which preferably corresponds to the number of yokes (24), these poles being guided such that they can move together in relation to the yokes (24) on a circular path in the circumferential direction of the yokes (24) and can be magnetically attracted by the yokes (24) in order to achieve a circular movement by exciting the yokes (24).

2. Electromechanical wheel brake apparatus according to Claim 1, **characterized in that** the yokes (24) are U-shaped and the field winding (22) is situated in the yokes (24).

3. Electromechanical wheel brake apparatus according to Claim 1, **characterized in that** the transverse flux motor (18) has three or more sections (21) which each have a field winding (22), a number of yokes (24) and associated poles (30).

4. Electromechanical wheel brake apparatus according to Claim 1, **characterized in that** the transverse flux motor (18) has permanent magnets.

5. Electromechanical wheel brake apparatus according to Claim 1, **characterized in that** the wheel brake apparatus (10) has a step-down gear mechanism (34) which is connected between the electric motor (18) and the rotation/translation conversion gear mechanism (48).

6. Electromechanical wheel brake apparatus according to Claim 5, **characterized in that** the step-down gear mechanism (34) is arranged within the rotor (20) of the electric motor (18), and the rotation/translation conversion gear mechanism (48) is arranged at least partly within the rotor (20) of the electric motor (18).

7. Electromechanical wheel brake apparatus according to Claim 1, **characterized in that** the rotation/translation conversion gear mechanism (48) is in the form of a ball screw drive (48).

8. Electromechanical wheel brake apparatus according to Claim 1, **characterized in that** the rotation/translation conversion gear mechanism (48) is non-self-locking.

9. Electromechanical wheel brake apparatus according to Claim 1, **characterized in that** the wheel brake apparatus (10) has a fixing brake (68) which can be used to stop the rotation/translation conversion gear mechanism (48).

10. Electromechanical wheel brake apparatus according to Claim 1, **characterized in that** the rotation/translation conversion gear mechanism (48) is in the form of a spiral gear mechanism (48), and **in that** a spindle (50) of the spiral gear mechanism (48) is driven so as to rotate.

## Revendications

1. Dispositif de freinage de roue électromécanique, comprenant un moteur électrique (18) qui présente un rotor annulaire (20), un mécanisme de conversion rotation/translation (48) pouvant être entraîné en rotation par le moteur électrique (18), et une garniture de friction (14) pouvant être serrée contre un corps de frein (16) au moyen du mécanisme de conversion rotation/ translation,
**caractérisé en ce que**
le moteur électrique (18) est un moteur à flux transversal (18) avec un bobinage d'excitation annulaire (22) entourant un axe de moteur imaginaire, le moteur électrique (18) présentant un nombre de culasses (24) réparties sur la périphérie du bobinage d'excitation (22) et excitables par celui-ci, et avec un nombre de pôles (30) correspondant de préférence au nombre de culasses (24), qui par rapport aux culasses (24), sont guidés conjointement de manière mobile sur une trajectoire circulaire dans la direction périphérique des culasses (24) et, pour réaliser un mouvement circulaire, peuvent être attirés magnétiquement par les culasses (24) par excitation des culasses (24).

2. Dispositif de freinage électromécanique de roue selon la revendication 1,
**caractérisé en ce que**
les culasses (24) se présentent sous la forme d'un U et le bobinage d'excitation (22) est inséré dans les culasses (24).

3. Dispositif de freinage électromécanique de roue selon la revendication 1,
**caractérisé en ce que**
le moteur à flux transversal (18) présente trois lignes (21) ou plus, chacune comportant un bobinage d'excitation (22), un nombre de culasses (24) et des pôles (30) associés.

4. Dispositif de freinage électromécanique de roue selon la revendication 1,
**caractérisé en ce que**
le moteur à flux transversal (18) présente des aimants permanents.

5. Dispositif de freinage électromécanique de roue selon la revendication 1,
**caractérisé en ce que**
le dispositif de freinage de roue (10) présente un démultiplicateur (34) monté entre le moteur électrique (18) et le mécanisme de conversion rotation/translation (48).

6. Dispositif de freinage électromécanique de roue selon la revendication 5,
**caractérisé en ce que**
le démultiplicateur (34) est disposé à l'intérieur du rotor (20) du moteur électrique (18) et le mécanisme de conversion rotation/translation (48) est disposé au moins partiellement à l'intérieur du rotor (20) du moteur électrique (18).

7. Dispositif de freinage électromécanique de roue selon la revendication 1,
**caractérisé en ce que**
le mécanisme de conversion rotation/translation (48) est une vis d'entraînement à billes (48).

8. Dispositif de freinage électromécanique de roue selon la revendication 1,
**caractérisé en ce que**
le mécanisme de conversion rotation/translation (48) est sans blocage automatique.

9. Dispositif de freinage électromécanique de roue selon la revendication 1,
**caractérisé en ce que**
le dispositif de freinage de roue (10) présente un frein de stationnement (68) qui permet de bloquer le mécanisme de conversion rotation/translation (48).

10. Dispositif de freinage électromécanique de roue selon la revendication 1,
**caractérisé en ce que**
le mécanisme de conversion rotation/translation (48) est un mécanisme hélicoïdal (48), et une broche (50) du mécanisme hélicoïdal (48) est entraînée en rotation.
